# EUROPEAN PATENT SPECIFICATION

(11) **EP 2 652 926 B1**
(45) Date of publication and mention of the grant of the patent: **06.12.2017**
(21) Application number: 11849560.5
(22) Date of filing: 07.12.2011
(51) Int. Cl.: H04L 12/58, G06F 15/16, H04W 4/12, H04L 29/08

(54) **AUGMENTING PERSONAL AVAILABILITY USING A MOBILE DEVICE**
VERSTÄRKUNG DER PERSÖNLICHEN ERREICHBARKEIT MITHILFE EINER MOBILEN VORRICHTUNG
AUGMENTATION DE LA DISPONIBILITÉ PERSONNELLE À L'AIDE D'UN DISPOSITIF MOBILE

(30) Priority: 16.12.2010 US 970020
(43) Date of publication of application: 23.10.2013
(73) Proprietor: Microsoft Technology Licensing, LLC, Redmond, WA 98052 (US)
(72) Inventor: ESTEVE BALDUCCI, Juan V., Redmond, Washington 98052-6399 (US); MILLER, Quentin S., Redmond, Washington 98052-6399 (US)
(74) Representative: Grünecker Patent- und Rechtsanwälte PartG mbB
(86) International application number: PCT/US2011/063741
(87) International publication number: WO 2012/082490

(56) References cited:
- US-A1- 2004 162 882
- US-A1- 2006 030 264
- US-A1- 2006 190 117
- US-A1- 2008 032 665
- US-A1- 2008 242 231
- US-A1- 2008 242 231
- US-A1- 2009 258 674
- US-A1- 2010 130 213

## Description

### BACKGROUND

Computer users utilize network-based messaging applications, such as Instant messaging ("IM") applications, for conveying text, voice and video communication between two or more users (in real-time), over a network, such as the Internet. Network-based messaging applications may further enable the updating of an online availability state to other users in their network. Currently, online availability is determined via the use (or lack of use) of a user's computer or via a user manually setting their online availability to one of a number of states (e.g., busy, do not disturb, etc.) through a network-based messaging application as their states change throughout the day. One drawback associated with determining online availability using current network-based messaging applications is that a user's attention is required to keep one's online availability state up to date. Another drawback with current network-based messaging applications is that they do not allow a user to passively change their online availability when the user is in situations where actively changing their state may not be socially acceptable (such as when the user is driving or in a business meeting, for example). It is with respect to these considerations and others that the various embodiments of the present invention have been made.

US 2008/242231 A1 relates to a controller in a wireless communication device automatically generating and sending presence updates when a detector in the device senses user motion or other parameters related to the user's current activity. The presence updates may indicate that the user is performing the sensed activity. When the detector no longer senses the user motion or other parameters, the controller automatically generates and sends another presence update to indicate that the user is finished performing the activity.

US 2009/258674 A1 relates to a system, method and computer program that utilizes motion detection circuitry, calendar information and/or time information to automatically update presence information associated with portable electronic equipment. Reliable presence information regarding the availability of the user is provided based on motion of the electronic equipment (also referred to herein as electronic device) and user's calendar information and optionally time information. The availability of reliable presence information will significantly increase the usage of presence information.

US 2010/130213 A1 relates to a positioning system (e.g., GPS) integrated in, or coupled to, a mobile device for determining the position of the mobile device. An availability status manager (ASM) in a vPBX acquires the position of the mobile device. The ASM can contain rules on how to route or otherwise control incoming phone calls based on availability status of one or more mobile devices in the vPBX network. When a call is received by the vPBX, the ASM determines the availability status of the receiving mobile device based on the geographic location of the receiving mobile device. The ASM then routes the call to the receiving mobile device, to another mobile device, or to a landline based on the availability status of the receiving mobile device and the availability status based rules.

US 2006/030264 A1 relates to a method and system utilizing presence information in a device. The method and system include detecting at least one of a change in the status for the user or a change in an activity associated with a capability of the device. The detection of the activity change includes a second device communicating the activity change with a presence service. The method and system also include automatically altering the capability of the device if the change in the status is detected or automatically altering the status if the change in the activity is detected.

### SUMMARY

It is the object of the present invention to provide a method of augmenting an online presence by leveraging mobile computing device sensors.

This object is solved by the subject matter of the independent claims.

Embodiments are given in the dependent claims.

This summary is provided to introduce a selection of concepts in a simplified form that are further described below in the Detailed Description. This summary is not intended to identify key features or essential features of the claimed subject matter, nor is it intended as an aid in determining the scope of the claimed subject matter.

Embodiments are provided for augmenting an online presence by leveraging mobile computing device sensors. State change and/or rate of change data measured by the mobile computing device sensors may be received. The state change and/or rate of change data may be compared with a set of rules to determine a matching online presence state for the mobile computing device. The set of rules may describe different online presence states associated with a user of the mobile computing device. A current online presence associated with the user of the mobile computing device may then be updated to the matching online presence state.

These and other features and advantages will be apparent from a reading of the following detailed description and a review of the associated drawings. It is to be understood that both the foregoing general description and the following detailed description are illustrative only and are not restrictive of the invention as claimed.

### BRIEF DESCRIPTION OF THE DRAWINGS

FIGURE 1 is a block diagram illustrating a network architecture for augmenting an online presence by leveraging mobile computing device sensors, in accordance with various embodiments;
FIGURE 2 is a block diagram illustrating server computing environment which may be utilized for augmenting an online presence by leveraging mobile computing device sensors, in accordance with various embodiments; and
FIGURE 3 is a flow diagram illustrating a routine for augmenting an online presence by leveraging mobile computing device sensors, in accordance with various embodiments.

### DETAILED DESCRIPTION

Embodiments are provided for augmenting an online presence by leveraging mobile computing device sensors. State change and/or rate of change data measured by the mobile computing device sensors may be considered. The state change and/or rate of change data may be compared with a set of rules to determine a matching online presence state for the mobile computing device. The set of rules may describe different online presence states associated with a user of the mobile computing device. A current online presence associated with the user of the mobile computing device may then be updated to the matching online presence state.

In the following detailed description, references are made to the accompanying drawings that form a part hereof, and in which are shown by way of illustrations specific embodiments or examples. These embodiments may be combined, other embodiments may be utilized, and structural changes may be made without departing from the scope of the present invention. The following detailed description is therefore not to be taken in a limiting sense, and the scope of the present invention is defined by the appended claims.

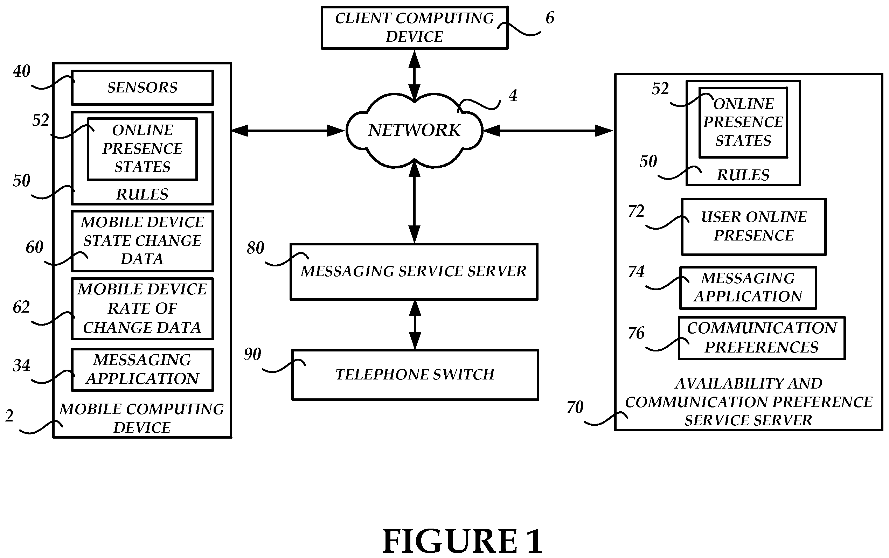

Referring now to the drawings, in which like numerals represent like elements through the several figures, various aspects of the present invention will be described. FIGURE 1 is a block diagram illustrating a network architecture for augmenting an online presence by leveraging mobile computing device sensors. The network architecture includes a mobile computing device 2 in communication with a client computing device 6, an availability and communication preference service server 70 (hereinafter, referred to as the availability server 70), a messaging service server 80 and a telephone switch 90. In accordance with various embodiments, the network 4 may comprise a local network or a wide area network (e.g., the Internet). It should be understood that the network 4 may represent a single network or, alternatively, multiple disparate networks associated with each of the servers 70 and 80. It should be appreciated by those skilled in the art that, in accordance with an embodiment, the servers 70 and 80 may represent services hosted on multiple servers or other complex computer systems.

The mobile computing device 2 may include a messaging application 34, sensors 40, rules 50, mobile device state change data 60 and mobile device rate of change data 62. In accordance with various embodiments, the mobile computing device 2 may comprise a mobile telephone or other portable device (such as a tablet) having computer functionality and which is capable of executing one or more application programs including, but not limited to, a laptop computer and a "smartphone" (i.e., a mobile phone having computer functionality and/or which is capable of running operating system software to provide a standardized interface and platform for application developers). In accordance with an embodiment, the messaging application 34 may comprise a client application program which is configured for conveying text, voice and video communication between two or more computers (such as the client computing device 6), over the network 4, such as the Internet. The messaging application 34 may be further configured to communicate with the availability server 70 for updating an online availability state to other client computing devices in a network. Moreover, as will be described in greater detail herein, the messaging application 34 may also be configured to augment an online presence by leveraging mobile computing device sensors (i.e., the sensors 40). In accordance with an embodiment, the messaging application 34 may comprise any number of messaging applications including, but not limited to the LYNC and LIVE MESSENGER instant messenger ("IM") client applications from MICROSOFT CORPORATION of Redmond, Washington. It should be appreciated that other messaging applications from other manufacturers may be utilized in accordance with the various embodiments described herein.

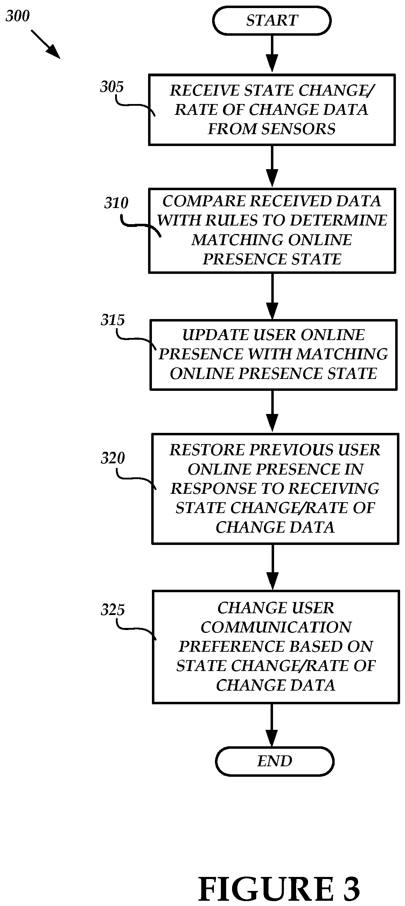

The sensors 40 in the mobile computing device 2 may comprise one or more sensors for measuring data attributes associated with the mobile computing device 2 including, but not limited to, location, direction, speed of travel, time of day, day of week, amount of light, device orientation, temperature and pressure. The sensors 40 may also comprise the ability to detect the presence of a wireless network (e.g., a "Wi-Fi" network) or other mobile computing devices (e.g., via BLUETOOTH wireless technology) without actually making a network or a device connection). Thus, in accordance with an embodiment, the sensors 40, which should be known to those skilled in the art, may include a light sensor, a position sensor, an accelerometer, a temperature sensor, a pressure sensor and a wireless network interface device (for detecting and connecting to other wireless networks/devices) and a gyroscope. In addition, the sensors 40 may also be capable of detecting communication usage data associated with the mobile computing device 2. For example, the communication usage data may indicate whether the mobile computing device 2 is currently being used on a telephone call, receiving data, or both. As will be described in greater detail herein with respect to FIGURE 3, the messaging application 34, in accordance with an embodiment, may be utilized to receive mobile device state change data 60 and mobile device rate of change data 62 relating to any change and/or rate of change of the data attributes and communication usage data measured by the sensors 40.

In accordance with an embodiment, the rules 50 may comprise various settings associated with mobile device state change data 60 and/or the mobile device rate of change data 62 measured by the sensors 40. In particular, the rules 50 may include a library of online presence states 52 associated with the online presence or availability of a user of the mobile computing device 2. In accordance with an embodiment, the online presence states 52 may include, without limitation, the following states: "available," "busy," "do not disturb," "be right back," "off work," "free" and "away." The rules 50 may be configured to associate the online presence states 52 with specific instances of measured sensor data. For example, a user wishing to change his or her online presence may flip over the mobile computing device 2, thereby causing the sensors 40 to detect a change in orientation. A rule in the rules 50 may be defined such that a change in orientation (such as the aforementioned "flip") is associated with an online presence state 52 identified as "do not disturb." In response to the detected change in orientation, the messaging application 34 may be configured to access the rules 50 and determine the matching online presence state. The messaging application 34, upon determining the matching online presence state, may then be configured to compare the change in orientation to the rules 50 and determine the aforementioned corresponding "do not disturb" presence state. The messaging application 34 may then communicate the change in state to the availability server 70 so that the user's current online presence will be established as "do not disturb."

The client computing device 6 may comprise any type of computer or computing device capable of executing one or more application programs. In accordance with an embodiment, the client computing device 6 may be utilized to execute a messaging application (not shown) for conveying text, voice and video communication to a user of the mobile computing device 2 over the network 4.

The availability server 70 may comprise the rules 50, a user online presence 72, a messaging application 74, and communication preferences 76. As discussed above with respect to the mobile computing device 2, the rules 50 may comprise various settings associated with mobile device state change data 60 and/or the mobile device rate of change data 62, measured by the sensors 40, and communicated from the mobile computing device 2 to the availability server 70. In particular, the rules 50 may include a library of online presence states 52 associated with the online presence or availability of a user of the mobile computing device 2.

The user online presence data 72 may comprise a current user online presence state associated with the user of the mobile computing device 2. As will be described in greater detail herein, the user online presence 72 may be updated by either the messaging application 34 (executing on the mobile computing device 2) or the messaging application 74 (executing on the availability server 70) to publish a user's (i.e., the user of the mobile computing device 2) current online availability to other users in a network based on the mobile device state change data 60 and/or the mobile device rate of change data 62 received (by either the mobile computing device 2 or the availability server 70) from the sensors 40.

In accordance with an embodiment, the messaging application 74 may comprise a server application program which is configured for managing availability and communication preferences for users of messaging client applications such as the messaging application 34. In accordance with an embodiment, the messaging application 74 may be configured to update an online availability state for a user of the mobile computing device 2. Furthermore, as will be described in greater detail herein, the messaging application 74 may also be configured to augment an online presence by leveraging mobile computing device sensors (i.e., the sensors 40). In accordance with an embodiment, the messaging application 74 may comprise a collaborative server application such as the EXCHANGE SERVER collaborative application, the LYNC SERVER application or the MESSENGER service from MICROSOFT CORPORATION of Redmond, Washington. It should be appreciated that other collaborative server applications from other manufacturers may be utilized in accordance with the various embodiments described herein.

The communication preferences 76 may comprise user preferences for a number of communication methods which may be utilized with respect to messages sent and received between a user of the mobile computing device 2 and other network users (such as a user of the client computing device 6). The communication preferences 76 may include, without limitation, the following preferences: IM text messages, electronic mail (e.g., "e-mail in lieu of IM"), voice calls (e.g., "voice call in lieu of IM"), video conferencing, voicemail (for directing voice calls received), and a restriction preference which may be associated with one or more of the aforementioned communication preferences (such as restricting voice conferencing, for example). In accordance with an embodiment, and as will be described in greater detail below with respect to FIGURE 3, the communication preferences 76 may be changed (by either the messaging application 34 or the messaging application 74) based on sensor data received from the sensors 40. For example, if it is determined (based on the mobile device state change data 60 and/or mobile device rate of change data 62) that the user of the mobile computing device 2 is moving (e.g., the user is driving), then the messaging applications 34 or 74 may change the user's preferred communication method in the communication preferences 76 to "voice call in lieu of IM" while the user is driving.

The messaging service server 80 may provide an infrastructure for enterprise instant messaging, presence, file transfer, peer-to-peer and multiparty voice and video calling, ad hoc and structured conferences (audio, video and web) and Public Switched Telephone Network ("PSTN") connectivity for users in the network architecture of FIGURE 1. In accordance with an embodiment, the messaging service server 80 may comprise the LYNC SERVER real-time communications server from MICROSOFT CORPORATION of Redmond Washington. It should be appreciated that other communication server applications from other manufacturers may be utilized in accordance with the various embodiments described herein.

The telephone switch 90 may comprise a conventional telephony switch connected to the PSTN. In accordance with various embodiments, the messaging service server 80 may be utilized to provide PSTN connectivity to users of the mobile computing device 2 and the client computing device 6 for making and receiving voice calls as well as for generating and accessing voicemail messages.

### Exemplary Operating Environment

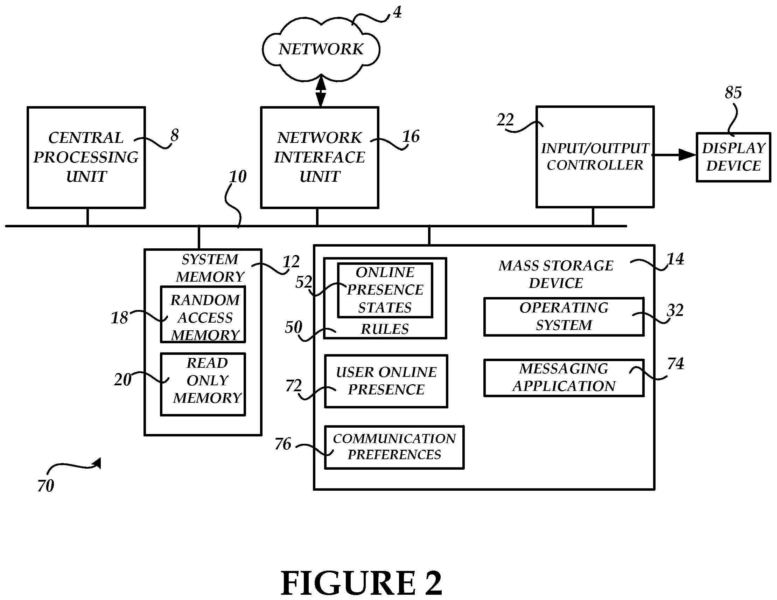

Referring now to FIGURE 2, the following discussion is intended to provide a brief, general description of a suitable computing environment in which various illustrative embodiments may be implemented. While various embodiments will be described in the general context of program modules that execute in conjunction with program modules that run on an operating system on a computing device, those skilled in the art will recognize that the various embodiments may also be implemented in combination with other types of computer systems and program modules.

Generally, program modules include routines, programs, components, data structures, and other types of structures that perform particular tasks or implement particular abstract data types. Moreover, those skilled in the art will appreciate that the various embodiments may be practiced with a number of computer system configurations, including hand-held devices, multiprocessor systems, microprocessor-based or programmable consumer electronics, minicomputers, mainframe computers, and the like. The various embodiments may also be practiced in distributed computing environments where tasks are performed by remote processing devices that are linked through a communications network. In a distributed computing environment, program modules may be located in both local and remote memory storage devices.

FIGURE 2 shows the availability server 70 which may include a computer capable of executing one or more application programs. The availability server 70 includes at least one central processing unit 8 ("CPU"), a system memory 12, including a random access memory 18 ("RAM") and a read-only memory ("ROM") 20, and a system bus 10 that couples the memory to the CPU 8. A basic input/output system containing the basic routines that help to transfer information between elements within the computer, such as during startup, is stored in the ROM 20.

The availability server 70 may further include a mass storage device 14 for storing an operating system 32, the rules 50 (include the library of online presence states 52), the user online presence 72, the messaging application 74 and the communication preferences 76. In accordance with various embodiments, the operating system 32 may be suitable for controlling the operation of a networked computer, such as the WINDOWS operating systems from MICROSOFT CORPORATION of Redmond, Washington. The mass storage device 14 is connected to the CPU 8 through a mass storage controller (not shown) connected to the bus 10. The mass storage device 14 and its associated computer-readable media provide non-volatile storage for the availability server 70. The term computer-readable media as used herein may include computer storage media. Computer storage media may include volatile and nonvolatile, removable and non-removable media implemented in any method or technology for storage of information, such as computer readable instructions, data structures, program modules, or other data. Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by the availability server 70. Any such computer storage media may be part of the availability server 70.

The term computer-readable media as used herein may also include communication media. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

According to various embodiments of the invention, the availability server 70 may operate in a networked environment using logical connections to remote computers through the network 4. The availability server 70 may connect to the network 4 through a network interface unit 16 connected to the bus 10. It should be appreciated that the network interface unit 16 may also be utilized to connect to other types of networks (including wireless networks) and remote computing systems. The availability server 70 may also include an input/output controller 22 for receiving and processing input from a number of input types, including a keyboard, mouse, pen, stylus, finger, and/or other means (not shown). Similarly, the input/output controller 22 may provide output to a display device 85 as well as a printer, or other type of output device (not shown). It should be appreciated that the mobile computing device 2 and the client computing device 6, shown in FIGURE 1, may include many of the conventional components shown and discussed above with respect to the availability server 70. In accordance with various embodiments, the mobile computing device 2 may also include additional conventional components (not shown) such as a wireless radio, a power supply (e.g., a removable or non-removable battery) and a real-time clock.

FIGURE 3 is a flow diagram illustrating a routine 300 for augmenting an online presence by leveraging mobile computing device sensors, in accordance with various embodiments. When reading the discussion of the routines presented herein, it should be appreciated that the logical operations of various embodiments of the present invention are implemented (1) as a sequence of computer implemented acts or program modules running on a computing system and/or (2) as interconnected machine logical circuits or circuit modules within the computing system. The implementation is a matter of choice dependent on the performance requirements of the computing system implementing the invention. Accordingly, the logical operations illustrated in FIGURE 3 and making up the various embodiments described herein are referred to variously as operations, structural devices, acts or modules. It will be recognized by one skilled in the art that these operations, structural devices, acts and modules may be implemented in software, in firmware, in special purpose digital logical, and any combination thereof without deviating from the scope of the present invention as recited within the claims set forth herein.

The routine 300 begins at operation 305, where the messaging application 34, executing on the mobile computing device 2, receives the mobile device state change data 60 and/or the mobile device rate of change data 62 which has been measured by the sensors 40. It should be appreciated that according to an alternative embodiment, the messaging application 74, executing on the availability server 70 may also be utilized to receive the mobile device state change data 60 and/or the mobile device rate of change data 62. In particular, the received mobile device state change data 60 and the mobile device rate change data 62 may include one or more of the following: a change in ambient light received by the mobile computing device 2, a change in a position of the mobile computing device 2, a change in a rate of acceleration of the mobile computing device 2, a change in a current communication state of the mobile computing device 2 (e.g., a change in communication from a data being received on the mobile computing device 2 to a telephone call being made on the mobile computing device 2) and a change in a current orientation of the mobile computing device 2 (e.g., a measured change in the angular momentum of the mobile computing device 2 including when the mobile computing device 2 is being rotated or spun), a change in a current environment surrounding the mobile computing device (e.g., changes in temperature, pressure, etc.) and a detection of one or more other mobile computing devices. It should be appreciated that the detection of other mobile computing devices may be accomplished without actually establishing a network connection (such as a "Wi-Fi" or BLUETOOTH wireless technology connection) with the other mobile computing devices.

From operation 305, the routine 300 continues to operation 310, where the messaging application 34, executing on the mobile computing device 2, compares the received mobile device state change data 60 and/or the mobile device rate of change data 62 (which has been measured by the sensors 40) to the rules 50 to determine a matching online presence state 52. It should be appreciated that according to an alternative embodiment, the messaging application 74, executing on the availability server 70 may also be utilized to make the aforementioned comparison. For example, received mobile device state change data 60 and/or the mobile device rate of change data 62 may indicate, from the sensors 40, that the mobile computing device 2 has been flipped (i.e., turned over), then the messaging applications 34 or 74 may access the rules 50 and find a matching or appropriate rule for the present state of the mobile computing device 2. For example, the rules 50 may contain a rule which states that if the mobile computing device 2 is upside down, then a matching online presence state 52 is "Do Not Disturb," (i.e., the online presence should be set to "Do Not Disturb") but if the mobile computing device 2 is right side up and the lights are turned off (e.g., the light sensor in the mobile computing device 2 detects an absence of ambient light), then a matching online presence state 52 is "Unavailable," (i.e., the online presence should be set to "Unavailable") but if the mobile computing device 2 is right side up and the lights are turned on, then the matching online presence state is "Available" (i.e., the online presence should be set to "Available"). It should be understood that the aforementioned rule examples are non-exhaustive and that other rules may also be utilized in determining online presence states based on received sensor data. It should also be appreciated that these rules may be preset by the system, may be created by the user or may be learned from the user's communication behavior and device usage.

From operation 310, the routine 300 continues to operation 315, where the messaging application 34, executing on the mobile computing device 2, updates the user online presence 72 with a matching online presence state 52. It should be appreciated that according to an alternative embodiment, the messaging application 74, executing on the availability server 70, may also be utilized to make the aforementioned update. For example, using the previous example discussed at operation 310, if the mobile computing device 2 is upside down, then the online presence 72 would be updated to "Do Not Disturb." In accordance with an embodiment, the online presence 72 may be updated by either active or passive use of the sensors 40 in the mobile computing device 2. For example, as discussed above, a user may physically change a state of the mobile computing device 2 by flipping, turning, or spinning the device to initiate the matching of the online presence states 52 and the updating of the online presence 72. Conversely, the messaging applications 34 or 74 may passively update the online presence 52 based on received location data received by the sensors 40 based on the assumption that the mobile computing device is currently on the user's person or within reach of the user. For example, a current geographical location of the mobile computing device 2 may determined by position data measured by the sensors 40. Furthermore, a rule 50 may store a geographical location associated with a user's workplace and state that if the mobile computing device 2 is a predetermined distance away from the stored geographical location, then the user's online presence should be set to "Unavailable or Away." The online presence 72 would be thus be passively updated to "Unavailable or Away" by the messaging applications 34 or 74 based on the aforementioned rule. In accordance with an embodiment, the online presence 72 may also be updated by automatically setting the online presence 72 to an unavailable state based on an acceleration rate, a distance and/or a time threshold associated with a matching online presence state 52 in a rule 50. For example, a rule 50 may be based on a user preference that the user is often driving and state that if the mobile computing device 2 is moving (i.e., a rate of acceleration is detected by the sensors 40), then the user's online presence should be set to "Busy, Unavailable or Driving." The messaging applications 34 or 74 may then automatically update the online presence 72 based on the aforementioned rule. As another example, the rules 50 may utilize heuristics based on historical presence information to determine that a user his on his or her way home from work and state that an online presence should only be updated once the user has reached home or other location (i.e., the mobile computing device 2 has reached a geographical location corresponding to the user's home or other location) or that the online presence should only be updated once the user has stayed at home or another location for more than a certain threshold of time. The messaging applications 34 or 74 may then automatically update the online presence 72 based on the aforementioned rules. As another example, a rule 50 may include a restriction of one or more communication methods for communicating with the user of the mobile computing device 2. In particular, a rule 50 may instruct the messaging applications 34 or 74 to restrict certain communication, such as not enabling voice conferencing (even though this functionality may be supported by the mobile computing device 2). Alternatively, a rule 50 may instruct the messaging applications 34 or 74 to automatically restrict communication to a certain mode of communication based on received sensor location data. Thus, a communication preference 76 may be updated to favor certain modes of communication over others, such as "e-mail in lieu of IM" while the user is at home. As another example, a rule 50 may include suggesting an alternative communication method to a communication initiating party (e.g., the client computing device 6) for communicating with the user of the mobile computing device 2. In particular, a rule 50 may instruct the messaging applications 34 or 74 to suggest, to a communication initiating party (e.g., by sending an e-mail to a user of the client computing device 6), "voice call in lieu of IM" as a preferred means of communication when a user of the mobile computing device 2 is driving (based on received sensor acceleration data).

From operation 315, the routine 300 continues to operation 320, where the messaging application 34, executing on the mobile computing device 2, may restore a previous user online presence in response to receiving the mobile device state change data 60 and/or the mobile device rate of change data 62. It should be appreciated that according to an alternative embodiment, the messaging application 74, executing on the availability server 70, may also be utilized to perform the aforementioned operation. In particular, a user may initiate the switching of a user online presence 76 from "Unavailable" to "Available" by undoing a previous action (e.g., flipping, turning or spinning) made with respect to the mobile computing device 2. For example, a user may restore a previous online presence 76 by turning the mobile computing device 2 so that it is now right side up instead of upside down. It should be appreciated that the right side up state of the mobile computing device 2 may also have an "Available" matching online presence state 52 in the rules 50.

From operation 320, the routine 300 continues to operation 325, where the messaging application 34, executing on the mobile computing device 2, may change a user communication preference based on the mobile device state change data 60 and/or the mobile device rate of change data 62. It should be appreciated that according to an alternative embodiment, the messaging application 74, executing on the availability server 70, may also be utilized to perform the aforementioned operation. For example, the messaging applications 34 and 74 may be configured to automatically set a communication preference 76 for a user of the mobile computing device 2 so that an automated response consisting of an "out of office" or "on vacation" message is generated, so that other users would know that the user of the mobile computing device 2 is out of town or on vacation and thus may send e-mail to other coworkers if expecting a prompt answer. The automatic setting of a communication preference 76 may be initiated in response to determining, from the mobile device state change data 60 and/or the mobile device rate of change data 62, as measured by the sensors 40, that a position of the mobile computing device 2 is beyond a certain threshold away from the user's office. The setting of the communication preference 76 may also be initiated in response to generating and receiving feedback from the user to approve a communication preference change and may optionally include a message from the user within the automated response. From operation 325, the routine 300 then ends.

Although the invention has been described in connection with various illustrative embodiments, those of ordinary skill in the art will understand that many modifications can be made thereto within the scope of the claims that follow. Accordingly, it is not intended that the scope of the invention in any way be limited by the above description, but instead be determined entirely by reference to the claims that follow.

## Claims

1. A method of augmenting an online presence by leveraging mobile computing device sensors (40), comprising:
receiving (305), by the mobile computing device (2), at least one of state change data (60) and rate of change data (62) measured by the mobile computing device sensors;
comparing (310), by the mobile computing device, the at least one of state change data and rate of change data with a set of rules (50) to determine a matching online presence state (52), the set of rules describing a plurality of online presence states associated with a user of the mobile computing device; and
updating (315), by the mobile computing device, an online presence (72) associated with the user of the mobile computing device with the matching online presence state,
**characterized in that**:
a light sensor detects presence or absence of ambient light; and
the at least one state change data and rate of change data measured by the mobile computing device sensors indicate that the mobile computing device has been flipped, the set of rules includes at least one rule defining a first online presence state for a flipped mobile computing device being upside down, a second online presence state for a mobile computing device being right side up in absence of ambient light, and a third online presence state for a mobile computing device being right side up in presence of ambient light, and the online presence is updated with the matching online presence state corresponding to the at least one rule.

2. The method of claim 1, wherein receiving, by the mobile computing device, at least one of state change data and rate of change data measured by the mobile computing device sensors comprises further receiving at least one of:
a change in a position of the mobile computing device;
a change in a rate of acceleration of the mobile computing device;
a change in a current communication state of the mobile computing device;
a change in a current orientation of the mobile computing device;
a change in a current environment surrounding the mobile computing device; and
a detection of one or more other mobile computing devices.

3. The method of claim 1, wherein the mobile computing device sensors measure the at least one of state change data and rate of change data while the user of the mobile computing device passively uses the mobile computing device sensors.

4. The method of claim 1, wherein the mobile computing device sensors measure the at least one of state change data and rate of change data while the user of the mobile computing device actively uses the mobile computing device sensors in order to update his online presence.

5. The method of claim 4, further comprising restoring (320) a previous online presence state associated with the user of the mobile computing device in response to actively using the mobile computing device sensors.

6. The method of claim 1, wherein updating, by the mobile computing device, an online presence associated with the user of the mobile computing device with the matching online presence state comprises:
automatically setting the online presence to an unavailable state based on at least one of an acceleration rate, a location and a time threshold associated with the matching online presence state;
restricting at least one communication method for communicating with the user of the mobile computing device; and
suggesting an alternative communication method to a communication initiating party for communicating with the user of the mobile computing device.

7. The method of claim 1, further comprising changing (325) at least one communication preference for the user of the mobile computing device based on the at least one of state change data and rate of change data measured by the mobile computing device sensors.

8. A computer-readable medium storing computer-executable instructions that, when carried out by a processor, cause the processor to perform all of the steps of the method of one of claims 1 to 7.

9. A system comprising means adapted to perform all of the steps of the method of one of claims 1 to 7.

## Patentansprüche

1. Verfahren zum Erweitern einer Online-Präsenz durch das Einsetzen von Mobilcomputergerät-Sensoren (40), umfassend:
Empfangen (305), durch das Mobilcomputergerät (2), von Zustandsänderungsdaten (60) und/oder Änderungsratendaten (62), die durch Mobilcomputergerät-Sensoren gemessen werden,
Vergleichen (310), durch das Mobilcomputergerät, der Zustandsänderungsdaten und/oder Änderungsratendaten mit einem Satz von Regeln (50), um einen entsprechenden Online-Präsenzzustand (52) zu bestimmen, wobei der Satz von Regeln eine Vielzahl von mit einem Benutzer des Mobilcomputergeräts assoziierten Online-Präsenzzuständen beschreibt, und
Aktualisieren (315), durch das Mobilcomputergerät, einer mit dem Benutzer des Mobilcomputergeräts assoziierten Online-Präsenz (72) mit dem entsprechenden Online-Präsenzzustand,
**dadurch gekennzeichnet, dass**:
ein Lichtsensor die Anwesenheit oder Abwesenheit von Umgebungslicht erfasst, und
die Zustandsänderungsdaten und/oder Änderungsratendaten, die durch die Mobilcomputergerät-Sensoren gemessen werden, angeben, dass das Mobilcomputergerät gedreht wurde, wobei der Satz von Regeln wenigstens eine Regel enthält, die einen ersten Online-Präsenzzustand für ein auf den Kopf gedrehtes Mobilcomputergerät, einen zweiten Online-Präsenzzustand für ein mit der rechten Seite nach oben gehaltenes Mobilcomputergerät in Abwesenheit von Umgebungslicht und einen dritten Online-Präsenzzustand für ein mit der rechten Seite nach oben gehaltenes Mobilcomputergerät in Anwesenheit von Umgebungslicht definiert, und wobei die Online-Präsenz mit dem entsprechenden Online-Präsenzzustand in Entsprechung zu der wenigstens einen Regel aktualisiert wird.

2. Verfahren nach Anspruch 1, wobei das Empfangen, durch das Mobilcomputergerät, von Zustandsänderungsdaten und/oder Änderungsratendaten, die durch die Mobilcomputergerät-Sensoren gemessen wurden, weiterhin das Empfangen wenigstens eines der Folgenden umfasst:
eine Änderung in der Position des Mobilcomputergeräts,
eine Änderung in der Beschleunigungsrate des Mobilcomputergeräts,
eine Änderung in einem aktuellen Kommunikationszustand des Mobilcomputergeräts,
eine Änderung in einer aktuellen Ausrichtung des Mobilcomputergeräts,
eine Änderung in einer aktuellen Umgebung um das Mobilcomputergerät herum, und
eine Erfassung eines oder mehrerer anderer Mobilcomputergeräte.

3. Verfahren nach Anspruch 1, wobei die Mobilcomputergerät-Sensoren die Zustandsänderungsdaten und/oder Änderungsratendaten messen, während der Benutzer des Mobilcomputergeräts die Mobilcomputergerät-Sensoren passiv verwendet.

4. Verfahren nach Anspruch 1, wobei die Mobilcomputergerät-Sensoren die Zustandsänderungsdaten und/oder Änderungsratendaten messen, während der Benutzer des Mobilcomputergeräts die Mobilcomputergerät-Sensoren aktiv verwendet, um seine Online-Präsenz zu aktualisieren.

5. Verfahren nach Anspruch 4, das weiterhin das Wiederherstellen (320) eines vorausgehenden mit dem Benutzer des Mobilcomputergeräts assoziierten Online-Präsenzzustands in Reaktion auf ein aktives Verwenden der Mobilcomputergerät-Sensoren umfasst.

6. Verfahren nach Anspruch 1, wobei das Aktualisieren, durch das Mobilcomputergerät, einer mit dem Benutzer des Mobilcomputergeräts assoziierten Online-Präsenz mit dem entsprechenden Online-Präsenzzustand umfasst:
automatisches Setzen der Online-Präsenz zu einem nicht verfügbaren Zustand basierend auf einer Beschleunigungsrate, einer Position und/einem Zeitschwellwert, die mit dem entsprechenden Online-Präsenzzustand assoziiert sind,
Beschränken wenigstens eines Kommunikationsverfahrens für das Kommunizieren mit dem Benutzer des Mobilcomputergeräts, und
Vorschlagen eines alternativen Kommunikationsverfahrens an eine eine Kommunikation einleitende Partei für das Kommunizieren mit dem Benutzer des Mobilcomputergeräts.

7. Verfahren nach Anspruch 1, das weiterhin das Ändern (325) wenigstens einer Kommunikationspräferenz für den Benutzer des Mobilcomputergeräts basierend auf Zustandsänderungsdaten und/oder Änderungsratendaten, die durch die Mobilcomputergerät-Sensoren gemessen werden, umfasst.

8. Computerlesbares Medium mit darauf gespeicherten computerausführbaren Befehlen, die bei einer Ausführung durch einen Prozessor veranlassen, dass der Prozessor alle Schritte des Verfahrens gemäß einem der Ansprüche 1 bis 7 durchführt.

9. System, das Einrichtungen umfasst, die zum Durchführen aller Schritte des Verfahrens gemäß einem der Ansprüche 1 bis 7 ausgebildet sind.

## Revendications

1. Procédé pour augmenter une présence en ligne en utilisant des capteurs de dispositif informatique mobile (40), consistant à:
recevoir (305), par le dispositif informatique mobile (2), au moins l'un des éléments que sont les données de changement d'état (60) et le taux de données de changement (62) mesurés par les capteurs de dispositif informatique mobile;
comparer (310), par le dispositif informatique mobile, ledit au moins un des éléments que sont les données de changement d'état et le taux de données de changement d'un ensemble de règles (50) pour déterminer un état de présence en ligne correspondant (52), l'ensemble de règles décrivant une pluralité des états de présence en ligne associés à un utilisateur du dispositif informatique mobile; et
mettre à jour (315), par le dispositif informatique mobile, une présence en ligne (72) associée à l'utilisateur du dispositif de calcul mobile à l'état de présence en ligne correspondant,
**caractérisé en ce que**:
un capteur de lumière détecte la présence ou l'absence de lumière ambiante; et
ledit au moins un des éléments que sont les données de changement d'état et le taux de données de changement mesurés par les capteurs de dispositif informatique mobile indique que l'on a changé le dispositif informatique mobile, l'ensemble de règles comprend au moins une règle définissant un premier état de présence en ligne pour un dispositif informatique mobile renversé, un deuxième état de présence en ligne pour un dispositif informatique mobile avec le côté droit dirigé vers le haut en absence de lumière ambiante, et un troisième état de présence en ligne pour un dispositif informatique mobile avec le côté droit dirigé vers le haut en présence de lumière ambiante, et la présence en ligne est mise à jour avec l'état de présence en ligne correspondant correspondant à ladite au moins une règle.

2. Procédé selon la revendication 1, dans lequel la réception, par le dispositif informatique mobile, d'au moins l'un des éléments que sont les données de changement d'état et le taux de données de changement mesurées par les capteurs de dispositif informatique mobile comprend en outre la réception d'au moins l'un des éléments que sont:
un changement de position du dispositif informatique mobile;
un changement de taux d'accélération du dispositif informatique mobile;
un changement d'un état de communication actuel du dispositif informatique mobile;
un changement de l'orientation actuelle du dispositif informatique mobile;
un changement d'un environnement actuel entourant le dispositif informatique mobile; et
une détection d'un ou plusieurs autres dispositifs informatiques mobiles.

3. Procédé selon la revendication 1, dans lequel les capteurs du dispositif informatique mobile mesurent ledit au moins l'un des éléments que sont les données de changement d'état et le taux de données de changement tandis que l'utilisateur du dispositif informatique mobile utilise passivement les capteurs de dispositif informatique mobile.

4. Procédé selon la revendication 1, dans lequel les capteurs du dispositif informatique mobile mesurent ledit au moins l'un des éléments que sont les données de changement d'état et le taux de données de changement tandis que l'utilisateur du dispositif informatique mobile utilise activement les capteurs de dispositif informatique mobile pour mettre à jour sa présence en ligne.

5. Procédé selon la revendication 4, comprenant en outre la restauration (320) d'un état de présence en ligne précédent associé à l'utilisateur du dispositif informatique mobile en réponse à l'utilisation active les capteurs du dispositif informatique mobile.

6. Procédé selon la revendication 1, dans lequel la mise à jour, par le dispositif informatique mobile, d'une présence en ligne associée à l'utilisateur du dispositif informatique mobile avec l'état de présence en ligne correspondant consiste à:
régler automatiquement la présence en ligne sur un état d'indisponibilité sur la base d'au moins l'un des éléments que un taux d'accélération, un emplacement et un seuil de temps associé à l'état de présence en ligne correspondant:
limiter au moins un procédé de communication destiné à communiquer avec l'utilisateur du dispositif informatique mobile; et
suggérant un autre procédé de communication à une partie initiatrice de communication pour communiquer avec l'utilisateur du dispositif informatique mobile.

7. Procédé selon la revendication 1, comprenant en outre le changement (325) d'au moins une préférence de communication pour l'utilisateur du dispositif informatique mobile en fonction dudit au moins l'un des éléments que sont les données de changement d'état et le taux de données de changement mesurées par les capteurs de dispositif informatique mobile.

8. Support lisible par ordinateur stockant des instructions exécutables par ordinateur, lesquelles, effectuées par un processeur, conduisant le processeur à réaliser toutes les étapes du procédé selon l'une des revendications 1 à 7.

9. Système comprenant un moyen adapté pour réaliser toutes les étapes du procédé selon l'un des revendications 1 à 7.
